# EUROPEAN PATENT APPLICATION

(11) **EP 1 574 757 A2**
(43) Date of publication of application: **14.09.2005**
(21) Application number: 05101798.6
(22) Date of filing: 08.03.2005
(51) Int. Cl.: F16H 57/04, F28D 15/02

(54) **Heat pipe cooler for differential assembly**

(30) Priority: 08.03.2004 US 794419
(71) Applicant: DANA CORPORATION, Toledo, OH 43615 (US)
(72) Inventor: Matti, Assil Ismail, Madison Heights, MI 48071 (US); Mcleish, Patricia A., Rochester, MI 48309 (US); Dougherty, Michael L., Sr., Rochester Hills, MI 48306 (US); Alward, Robert W., Otisville, MI 48463 (US); Irwin, Earl James, Fort Wayne, IN 46845 (US)
(74) Representative: Jorio, Paolo

(57) **Abstract**

The present invention is directed to an apparatus to regulate and control the temperature of a differential axle assembly. A heat pipe (203) is inserted through the axle housing with a portion submersed in axle lubricant (213). Cooling fins (211a,212a) are preferably disposed on the heat pipe both in the submersed region of the heat pipe (203) and a portion external the housing. The heat pipe is preferably secured to and substantially accommodated by a removable cover plate (101) which is in turn secured to the housing (201). The heat pipe includes an evaporative working fluid to promote heat transfer between the lubricant and external environment.

## Description

### BACKGROUND OF THE INVENTION

### 1. Field of the Invention

The present invention relates to a heat pipe cooler for a differential assembly and particularly to an effective evaporative heat pipe assembly for transferring heat from the differential lubricant.

### 2. Description of related art

Typically axles are lubricated by a reservoir of oil in the sump which is circulated by the moving components. This is known as splash lubrication. The operating temperature of a splash lubricated axle assembly or other torque transmission device is generally dependent on the torque being transmitted, the ambient temperature, the speed of rotation and airflow over the device.

The operating temperature can be just above the ambient temperature to more than 200 degrees F above ambient. Operating temperatures significantly above 250 degrees F can begin to cause problems with the durability, of the components in the axle as well as the lubricant itself. These temperatures are generally encountered at higher speeds and/or torques such as high speed highway driving or trailer towing. Therefore it is desirable to avoid these higher temperatures as much as possible. It is the intention of the present invention to minimize these high operating temperatures.

It is known to provide cooling conduits within an axle assembly in order to avoid high operating temperatures. These conduits are positioned about a majority of the differential assembly and contain a hydraulic fluid from another device which is capable of cooling the lubricant in the axle.

It is also known to have a differential assembly with a heat pipe having heat-absorbing portions extending through an oil sump as well as externally disposed heat-transmitting devices.

Additionally, it is know to have a heat pipe including a closed tube having a heat exchange medium comprised of a plurality of fins.

Thus, the aim underlying the present invention lies in providing an effective fluid lubricant cooling area that is readily utilizable, without significantly increasing the costs of production, the required space, and weight.

### SUMMARY OF THE INVENTION

The present invention is directed to a heat pipe cooler for an axle having a housing and removable cover. The heat pipe is secured to the cover and includes a heat-receiving zone, a heat-emitting zone and a working fluid, wherein the working fluid is evaporated in said heat-receiving zone and condensed in said heat-emitting zone to promote heat transfer between said lubricant and an external environment. The heat-receiving zone is at least partially immersed in the lubricant and contains heat-dissipating fins to promote heat transfer.

### BRIEF DESCRIPTIONS OF THE DRAWINGS

A better understanding of the present invention will be had when reference is made to the accompanying drawings, wherein identical parts are identified by identical reference numbers and wherein:
FIG. 1 is rear view of a differential cover plate with integral heat pipe assembly according to the present invention.
FIG. 2 is a sectional view taken along lines 2-2 of Fig. 1.
FIG. 3 is rear view of a differential cover plate with integral heat pipe assembly according to an alternate embodiment of the present invention.
FIG. 4 is a sectional view taken along lines 4-4 of Fig. 3.
FIG. 5 is a sectional view of a heat pipe secured to a differential cover according to an alternate embodiment of the present invention.
FIG.6 is a sectional view of a heat pipe secured to a differential cover according to an alternate embodiment of the present invention.
FIG. 7 is a perspective view of a heat pipe secured to a differential cover according to an alternate embodiment of the present invention.
FIG. 8 is a front exposed view of the embodiment of fig. 7.
FIG. 9 is an enlarged partial exposed view of the embodiment of fig. 8.
FIG. 10 is a sectional view of a heat pipe secured to a differential cover according to an alternate embodiment of the present invention.
FIG. 11 is a perspective of an installed differential assembly employing the heat pipe of the present invention.
FIG. 12 is a front view of a heat pipe secured to a differential housing according to an embodiment of the' present invention.
FIG. 13 is a side view of the embodiment depicted in Fig. 12.
FIg. 14 is a side view of an alternate embodiment of the present invention incorporating a temperature sensitive valve.
Fig. 15 is a front exposed view of the temperature sensitive valve of Fig. 14.

### DETAILED DESCRIPTION OF THE PRESENT INVENTION

The present invention is directed to a heat pipe assembly for cooling lubricating fluid in a differential axle assembly. Preferably an evaporative heat pipe assembly is employed to increase the amount of heat transfer from the lubricant to the external environment. The assembly includes a hermetically sealed heat pipe containing a working fluid which is secured to a removable cover. The working fluid is selected to be vaporizable and condensable within the working temperatures of the differential assembly. The purpose of the heat pipe is to decrease the temperature of the lubricating fluid in the axle assembly. If the temperature of the lubricant gets to high, the lubricant will break down decreasing viscosity and its ability to effectively lubricate the gear assembly. The present invention effectively maintains the fluid lubricant at acceptable operating temperatures.

The heat pipe contains a working fluid such as water, or a sodium based fluid or other acceptable working fluids. In liquid form, the working fluid collects at the bottom of the heat pipe due to the force of gravity. The bottom of the heat pipe is submersed in the pool of axle lubricant and causes the working fluid to vaporize (latent heat of vaporization) thus reducing the temperature of the lubricating oil. The vapor then travels up to a condensing portion where the vapor condenses giving up heat to an external environment. The condensed liquid then returns to the evaporative portion where the cycle continues. The arrangement increases the amount of heat that can be transferred from the axle lubricant. The structure of the preferred embodiments of the present invention will no be explained.

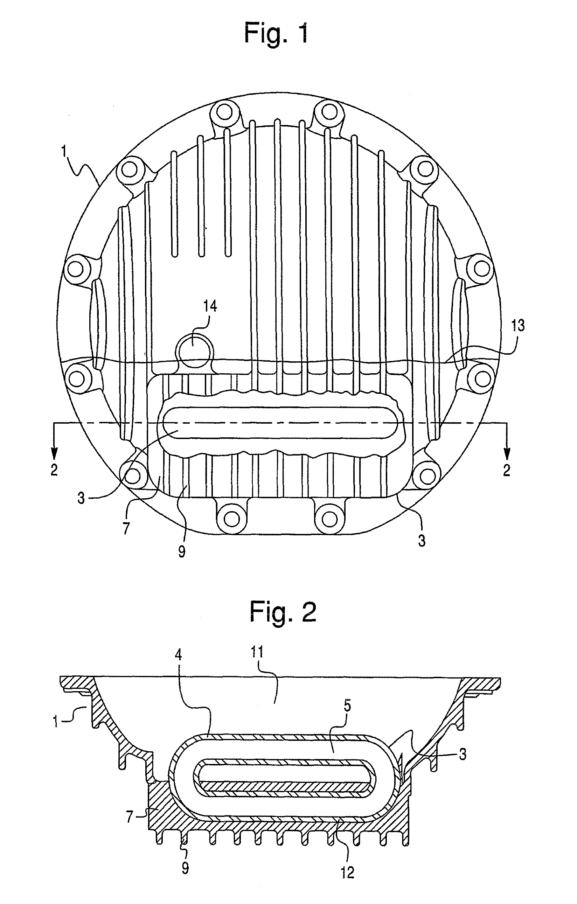

Figs. 1-2 depict differential cover plate 1 with integral heat pipe assembly 3. A hollow loop-shaped pipe 4 forming a continuous closed loop containing the heat transfer fluid 5 is integrally formed with a bolstered portion 7 of the cover 1. The heat pipe is simply placed within a molding during casting of the cover plate 1. The integral casting facilitates good contact between the heat pipe 4 and bolstered portion 7 to.promote heat transfer there between as well as firmly position the heat pipe. The thick bolstered portion 7 is formed with heat dissipating fins 9 on an external surface to enhance heat transfer. As can be seen a first elongated portion 11 of the heat pipe is disposed within the confines of the cover 1 and consequently within the axle housing. As can be seen in Fig. 1, the heat pipe is below the level of the lubricant 13, which lies just below access bore 14, and thus the first elongated portion of the heat pipe remains submersed in the axle lubricant during operation of,the axle assembly. A second elongated portion 12 remains substantially embedded within the bolstered portion 9. The working fluid vaporizes in the first elongated portion 11 as it extracts heat from the hot lubricant. The vapor migrates to the second elongated portion where it condenses and gives off heat through the bolstered portion 7 to the external environment. As can be readily seen the integral heat pipe and cover assembly provide a simple solution to increasing heat dissipation through the axle assembly without requiring modification to the axle assembly or remaining housing. Such an arrangement allows for easy retrofit applications to existing differential assemblies. The arrangement also allows for the heat pipe to be easily assembled with the cover away from the vehicle to which the axle is installed.

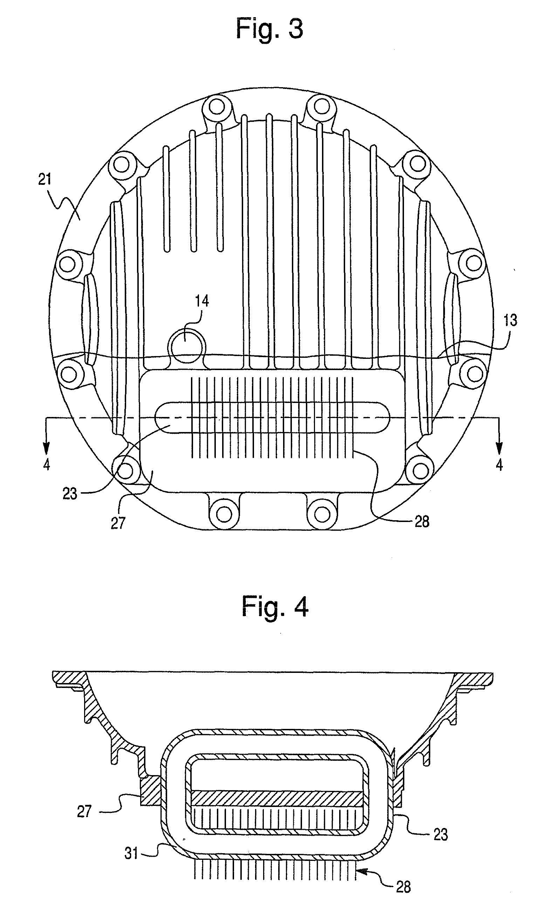

Figs. 3-4 represent an alternate embodiment of the present invention. As in the previous embodiment, heat pipe assembly 23 is integrally secured to the cover plate 21. As in the previous embodiment the heat pipe is preferably cast with the cover plate forming an integral connection between the heat pipe and cover plate. According to this embodiment (Figs. 3-4), the heat pipe extends through a modified bolstered portion 27 of the cover plate 21, such that the second elongated portion 31 is disposed external to the cover plate and axle housing. A plurality of heat dissipating fins 28 is secured to the second elongated portion of the heat pipe to promote heat transfer to the external environment. The remaining portions of the embodiment of Figs. 3-4 remains nearly identical to that of the previously described embodiments of Figs.1-2.

The heat pipe assembly 3, 23 may be filled with a sodium-based working fluid. However, the specific fluid and concentrations of soluble elements may be chosen to maintain a temperature to which the heat is to be transferred which is largely dependent on the desired operating temperature of the lubricating oil such as not to exceed 200 degrees. While this present embodiment does not include a capillary structure or wick, one may be incorporated to the extent it enhances the evaporative cycle. The working fluid must also be chosen to be compatible with the material of the heat pipe to avoid undesirable reactions. For example, the heat pipe 3, 23 and cover 1, may be made of aluminum, copper or stainless steel or other suitable materials.

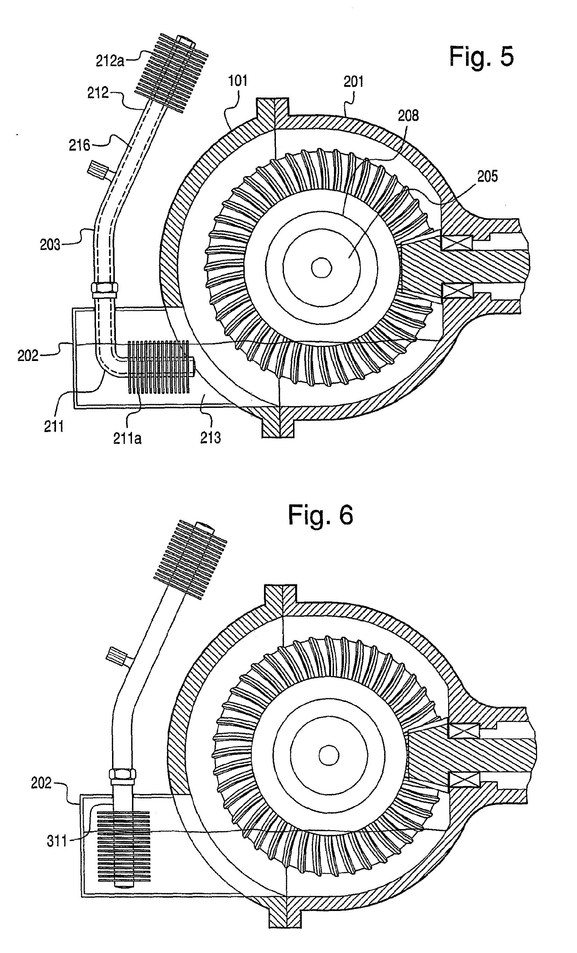

Figs. 5-6 depict sectional views of additional embodiments of the present invention. Referring to Fig. 5, a rear cover 101 is secured to a differential housing containing differential gearing to allow differential rotation between a pair (one shown) of output shafts 205. A pinion gear 206 drives a ring gear 207 which in turn rotates a differntial case containing differential gears (schematically represented by reference numeral 208) as is commonly known in the art. The cover 101 is simply bolted to a rear potion of the housing as is conventional in the art. The cover plate 201 preferably contains an integrally formed reservoir 202 in fluid communication with pool of lubricant 213 in the housing 201. The heat pipe assembly 203 contains a first evaporative end 211 disposed within the pool of lubricant 213 and includes a plurality of heat dissipating fins 211a also submersed in the lubricant. The heat pipe extends through the cover plate 1, reservoir 202, to the external environment to condensing portion 212 which also includes a plurality of heat dissipating fins 212 a. The heat pipe assembly 203 also preferably includes a wick member 216 disposed within said heat pipe to promote transfer of working fluid from said evaporative heat receiving zone 211 to the condensing heat emitting zone 212 through capillary action. The wick member may be made for example of a metal mesh.

Fig. 6 represents a slightly modified version of the embodiment depicted in Fig. 5. In this embodiment, the evaporative portion of the heat pipe 213 extends substantially vertical within the reservoir 202 as to substantially horizontal as the heat pipe 211 of the embodiment shown in Fig. 5.

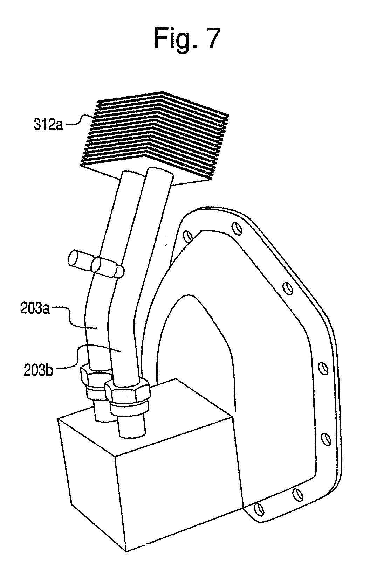

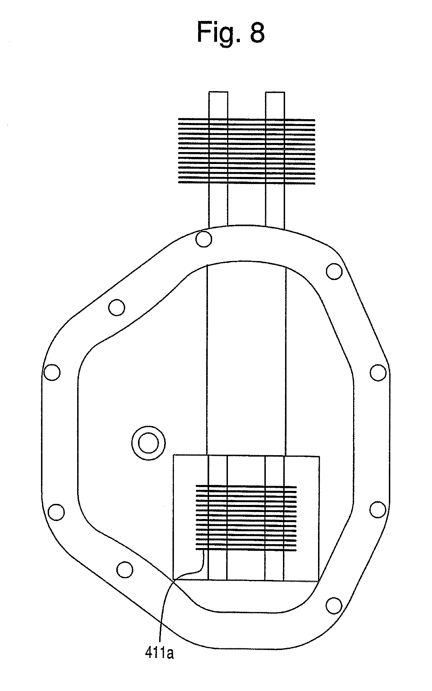

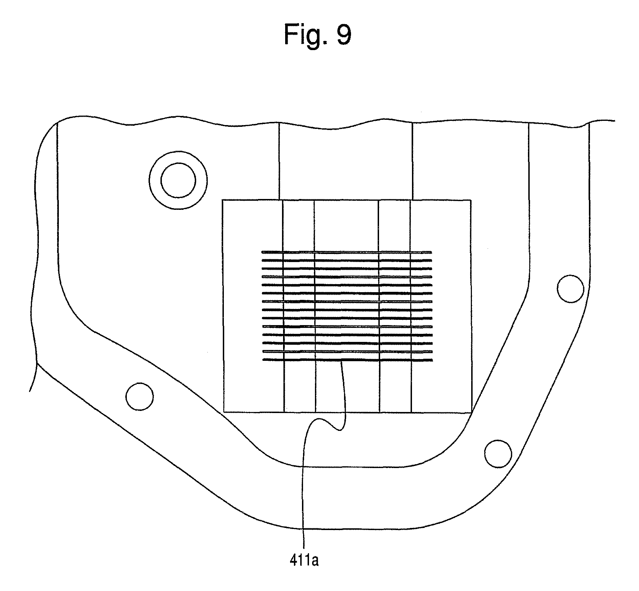

In the embodiments of Figs. 6-9 two heat pipes 203a, 203b, are employed each containing separate evaporative cycles as in the previous-embodiments However, a first set of heat dissipating fins 412a interconnects each of the heat pipes in the heat dissipating/condensing zone of the assembly. A second set of heat dissipating fins 411a interconnects each of the heat pipes 203a, 203b in the heat receiving/evaporating zone of the assembly as shown in Figs. 8-9.

As previously indicated the specific materials may be selected based on the material specified for the cover plate and operating temperature of the lubricating fluid of the axle assembly. The heat pipe, or envelope may be composed of a durable material able to withstand environmental corrosion while being lightweight. Aluminum, copper and even some types of plastics may be employed. In the embodiments shown in Fig. 1-4 the rear cover is preferably made of die cast aluminum and the heat pipe envelop made of aluminum with a sodium based working fluid contain therein. In the remaining embodiments metals such as aluminum, stainless steel or copper may be employed. Such metals provide sufficient strength to be able to contain high vapor pressures as higher working temperatures. The envelope may also be somewhat flexible, or bendable such as tygon tubing. The function of the wick is to transport the working fluid from the condenser to the evaporator via capillary action. The shape may be varied in form and can be made of various materials such as a metal screen. However, powdered metals, metal foam, sintered metals, felt type metals as well as some types of plastics or even glass my be employed so long as it is compatible with the working fluid and heat pipe envelope material. A wick may also be omitted forming a thermosyphon as in the embodiments of Figs. 1-4. It is finally noted that certain combinations of working fluid and envelopes which may produce non-condensable gasses should be avoided. These gases may result from a chemical reaction between the envelope and working fluid. For example, an aluminum envelope and water will produce AIO and hydrogen gas. Excessive accumulation of non-condensable gasses will cause the heat pipe to fail. However, it is well within the knowledge of one of ordinarily skill in the art to avoid such unacceptable combinations as such are well documented in the art.

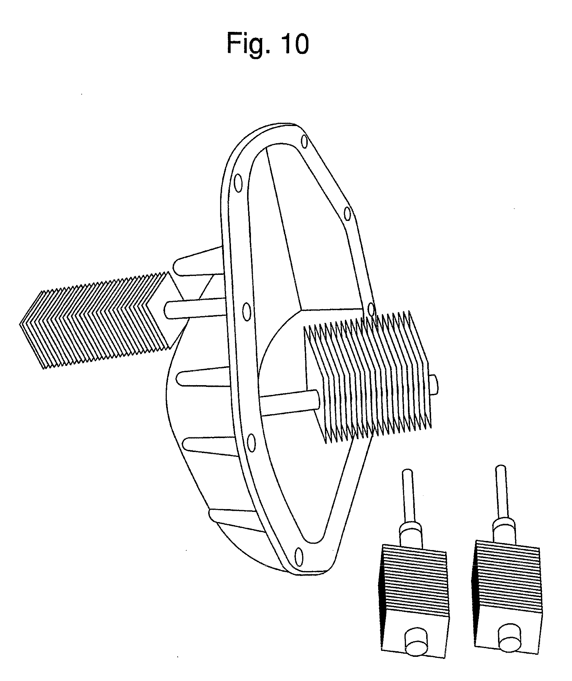

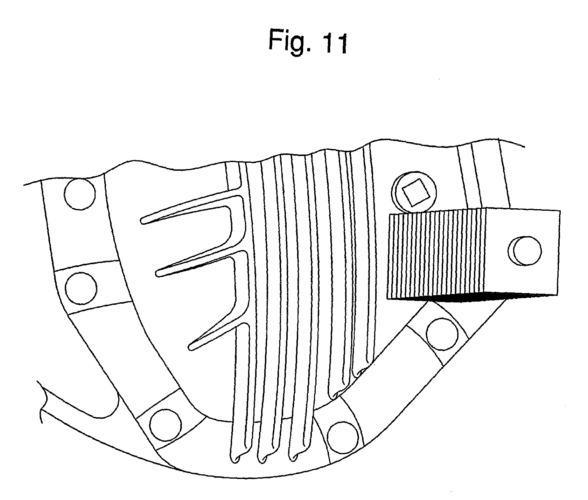

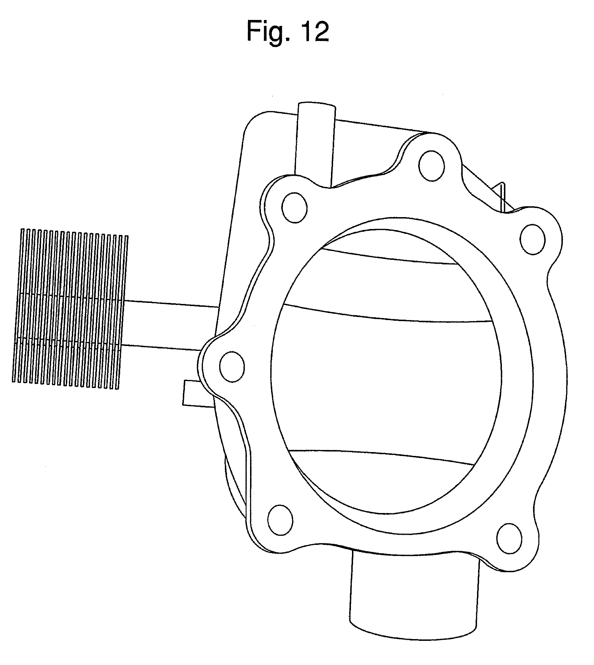

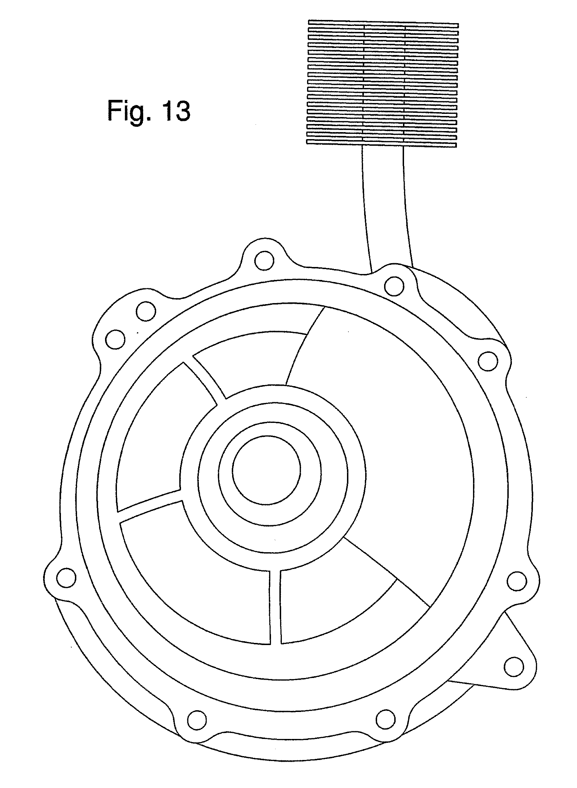

While the foregoing invention has been shown and described with reference to a preferred embodiment, it will be understood by those possessing skill in the art that various changes and modifications may be made without departing from the spirit and scope of the invention. For example additional exemplary embodiments are shown in Figures 1-13 which are also beleive to be within the spirit and scope of the present invention. For example, referring to Fig. 10, the heat pipe may extend within the housing beyond the cover plate. The heat pipe may also extend substantially horizontally as it emerges from the cover plate as shown in Fig. 11.

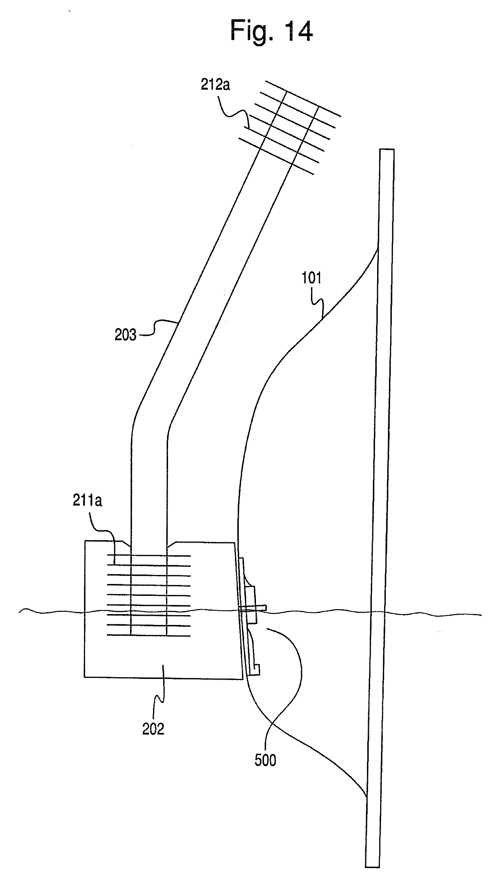

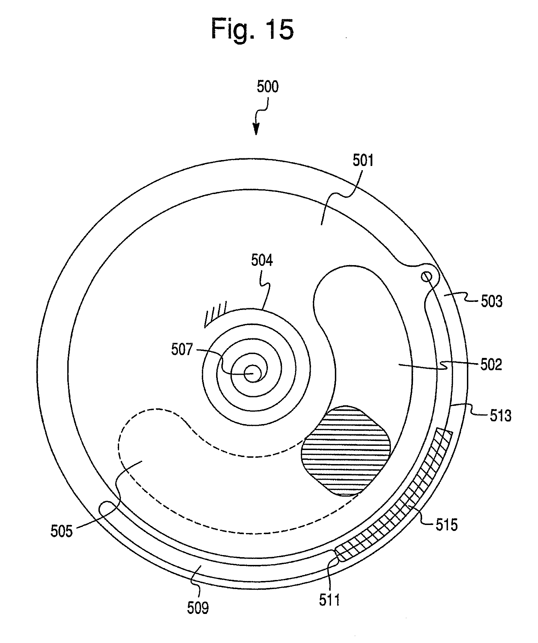

Figures 14 to 15 represent another preferred embodiment incporproating a temperaturte senstie valve between the heat pipe and fluid reservoir in the cover to. It is desirable to provide the lubricant when of sufficient viscosity to prevent frictional damage to mating gear teeth, yet be "flow-able" enough not to impede the efficiency of the gear mesh and create resistance. The proposed embodiment seeks to improve the concept of simply removing excessive heat, which is generated by fluid shear forces, by limiting the flow of oil to a heat sink source until needed. The contact restriction of oil to the heat sink will allow the axle to come up to operating temperature quickly to maintain operational efficiency. Once the desired temperature is achieved the thermostat (temperature sensate valve), as described below, can create sufficient fluid communication to maintain the optimum oil temperature for various duty cycles. Thus the present arrangement will allow heat to build up'more quickly to a desired temperature, then serve to remove excess heat. This is particularly desirable in cold environment to allow the lubricating oil to initial heat and increase efficiency of the differential gear assembly.

The thermostat (temperature senstitive valve) assembly 500 comprises a rear plate 503 with an elongated opening 505, preferably positioned such that the opening sits submerged below the oil level resident in the carrier housing. A front plate 501 with a corresponding slot 502 is pivotally affixed to a central pivot 507 such that the front plate 501 can be rotated relative to the rear plate 503 to create an orifice of varying size (from full open to closed) dependent on temperature of the oil. The central pivot 507 is affixed to the rear plate 503 and the front plate 501 is rotatably mounted thereon. A return spring 504, shown as a coiled arrangement, provides a biasing closing force such that the assembly prevents fluid communication with the heat exchanger unit until a predetermined temperature is reached. In the present arrangement the opening baises the front plate 501 in the counter clockwise direction to eliminate alignment of the openings in the two plates and thus isolate the heat pipe from the housing reservoir. A thermostat tube 509 comprises a curved, tubular outer cylinder (affixed to the rear plate) and a piston 511 and curved actuator rod 513 (the free end affixed to the front plate 501) is submerged in the axle fluid. The thermostatic actuator is filled on one side of the piston with a thermally reactive wax 515 (or other material) which changes volume (and possibly state, i.e. solid to liquid) based on a desired temperature of the axle lubricant. As the fluid heats up, the wax volume 515 increases which extends the piston 511 within the cylinder and thusly actuates the front plate 501 clockwise relative to the rear plate 503. Such rotation aligns the slotted openings so that the hot fluid comes into contact with the heat exchanger unit 211a. As the fluid temperature increases, the size of the aligned opening will increase thus allowing ever increasing flow of lubricant into rear reservoir 202 which in the present embodiment may be isolated from the remaining portion of the axle assembly reservoir during cold operation.

The described embodiments as well as'modifications thereto are all believed to be within the spirit and scope of the present invention and are defined by the following claims.

## Claims

1. An axle assembly for a motor vehicle, said axle assembly comprising:
an axle housing provided with a supply of liquid lubricant;
a cover removably secured to said housing; and
at least one sealed heat transfer pipe mounted to said cover and, said heat transfer pipe including an heat-receiving zone, a heat-emitting zone and a heat transfer fluid that flows there between, wherein said fluid being evaporated in said heat-receiving zone and condensed in said heat-emitting zone to promote heat transfer between said lubricant and an external environment; wherein said heat-receiving zone is at least partially immersed in said lubricant when said cover is secured to said housing.

2. The axle assembly according to claim 1, wherein said heat pipe is formed as a hollow loop-shaped pipe forming a continuous closed loop containing said heat transfer fluid.

3. The assembly according to claim 2, wherein said loop shaped pipe include at least two elongated portions, a first elongated portion being disposed within said housing an substantially submerged in said lubricant, said loop shaped heat pipe being cast within a bolstered rear portion of said cover.

4. The assembly according to claim 3, wherein a second elongated portion of said heat pipe is substantially embedded within a said bolstered portion of said cover, said bolstered portion having integrally formed fins directly exposed to said external environment.

5. The assembly according to claim 3, wherein said heat pipe extends through said bolstered portion and includes a second elongated portion disposed external said housing and directly exposed to said external environment.

6. The assembly according to claim 5, said heat pipe further includes a plurality of heat transfer fins affixed to said second elongated portion of said heat pipe.

7. The assembly according to claim 2 wherein said heat transfer fluid is sodium based solution.

8. An axle assembly for a motor vehicle, said axle assembly comprising:
an axle housing containing gears to facilitate differential rotation between a pair of driven output gears, said housing containing a pool of liquid lubricant;
a cover removably secured to said housing to provide access to said gears within said housing; and
at least one substantially sealed heat transfer pipe fixed to said cover and removable therewith relative to said housing, said heat transfer pipe including a heat-receiving zone, a heat-emitting zone and a working fluid, wherein said working fluid is evaporated in said heat-receiving zone and condensed in said heat-emitting zone to promote heat transfer between said lubricant and an external environment; wherein said heat-receiving zone is at least partially immersed in said lubricant when said cover is secured to said housing.

9. The assembly according to claim 8, wherein at least one a sealed heat transfer pipe includes a pair of heat pipes each containing separate heat-receiving zones and heat-emitting zones, said pair of heat pipes being interconnected by a set of common heat dissipating fins.

10. The assembly according to claim 9 wherein said set of common heat dissipating fins includes a first set disposed proximate said heat-receiving zone and being substantially immersed in said lubricant.

11. The assembly according to claim 9, said heat pipe extends external said housing to said external environment and said heat pipe further including a second set of common heat dissipating fins disposed proximate said heat-emitting zone in said external environment.

12. The assembly according to claim 8, wherein said cover contains an integrally formed reservoir in fluid communication with said pool of lubricant in said housing, said heat receiving zone of said heat pipe being substantially disposed within said reservoir.

13. The assembly according to claim 8, wherein said working fluid is a water based fluid.

14. The assembly according to claim 8, wherein said heat pipe further includes a wick member disposed within said heat pipe to promote transfer of working fluid from said heat receiving zone to said heat emitting zone through capillary action.

15. The assembly according to claim 14, wherein said wick member is formed of a metal screen.

16. The axle assembly according to claim 1, wherein said cover includes a reservoir formed therewith, said heat-receiving zone of said heat pipe being at least partially disposed within said reservoir, said assembly further comprising:
a temperatures sensitive valve provided to inhibit flow of said liquid lubricant between said reservoir and said housing.

17. The assembly according to claim 16, wherein said temperature sensitive valve is biased in a closed position to isolate said liquid lubricant within said housing from said reservoir during cold operation and progressively opens as said temperature of said liquid lubricant within said housing increases.

18. The assembly according to claim 17, wherein said temperature sensitive valve comprises:
a rear plate having a first hole;
a second plate having a second hole rotationally mounted relative to said rear plate between an open position whereby said first and second holes are at least partially aligned such that said liquid lubricant may flow between said housing and said reservoir and a closed position where said first and said holes are discretely positioned in an unaligned fashion thereby substantially isolating lubricant between said reservoir and said housing, and
a biasing member biasing said front plate in said closed position.

19. The assembly according to claim 18, wherein said biasing member comprises:
a piston disposed within a tubular cylinder filed with a thermally reactive wax, and
an actuator rod connecting said piston to said front plate wherein when said lubricant within said housing fluid heats up the volume of the thermally reactive wax increases which displaces the piston within the cylinder and consequently actuates the front plate towards said open position whereby as the lubricant temperature increases, the size of the aligned opening will progressively increase thus allowing ever increasing flow of lubricant into rear reservoir.

20. The assembly according to claim 8, wherein said cover includes a reservoir integrally formed therewith, said heat-receiving zone of said heat pipe being at least partially disposed within said reservoir, said assembly further comprising:
a temperatures sensitive valve provided to inhibit flow of said liquid lubricant between said reservoir and said housing; said temperature sensitive valve being biased in a closed position to isolate said liquid lubricant within said housing from said reservoir during cold operation and progressively opens as said temperature of said liquid lubricant within said housing increases; said temperature sensitive valve including;
a rear plate having a first hole;
a second plate having a second hole rotationally mounted relative to said rear plate between an open position whereby said first and second holes are at least partially aligned such that said liquid lubricant may flow between said housing and said reservoir and a closed position where said first and said holes are discretely positioned in an unaligned fashion thereby substantially isolating lubricant between said reservoir and said housing, and
a biasing member biasing said front plate in said closed position, said biasing member including;
a piston disposed within a tubular cylinder filed with a thermally reactive wax, and
an actuator rod connecting said piston to said front plate wherein when said lubricant within said housing fluid heats up the volume of the thermally reactive wax increases which displaces the piston within the cylinder and consequently actuates the front plate towards said open position whereby as the lubricant temperature increases, the size of the aligned opening will progressively increase thus allowing ever increasing flow of lubricant into rear reservoir.
